# EUROPEAN PATENT APPLICATION

(11) **EP 2 314 477 A1**
(43) Date of publication of application: **27.04.2011**
(21) Application number: 09425415.8
(22) Date of filing: 20.10.2009
(51) Int. Cl.: B60Q 1/44

(54) **Deceleration visual signaling system**

(71) Applicant: UVA S.r.l., 95122 Catania (IT)
(72) Inventor: Arcidiacono, Pietro, 95124 Catania (IT)

(57) **Abstract**

The deceleration visual signaling system is located in the technical field of the signaling systems installed in the vehicles. In the present technical solution such a signaling is activated only if it is caused by the use of the braking system. The proposed device expands the cases of signaling, including all possible events of deceleration, whichever the cause is. Besides it can use an independent system to detect the deceleration of a vehicle, computes the other kinematics variables, which are useful for system operations, and in case of deceleration activates a visual signaling, that can vary in terms of light intensity, flashing frequency and color, according to the danger level, which is related to the intensities of deceleration and the other kinematics variables of the vehicle. The device can be used in the automobile and transport industries, whereas it is useful to extend the warning signaling to improve safety.

## Description

### TECHNICAL REFERENCE FIELD

The technical reference field is that of the visual signaling used in the vehicles. The proposed device activates a visual signaling if the vehicle decelerates.

### CURRENT TECHNIQUE

The technique currently used in mass production vehicles, warns of deceleration of the vehicle by a system connected to the brake pedal, that, if pressed, causes the lighting bodies at the back of the vehicles to be switched on.

This signaling warns the driver in the vehicle behind of the imminent deceleration, to enable him to use precaution to avoid any contact between the two vehicles.

This system:
- Does not warn of all the possible causes of deceleration but only those caused by the use of the braking system;
- Fails to give information on the intensity of the car's deceleration.

To improve warning signals of a decelerating vehicle, many solutions have been proposed, also as patented project, but until now none of them have been adopted in mass production. Some possible causes, that explain the lack of use of such solutions, are listed below:
- The source, used for acceleration signal and other kinematics variables, are placed, partially or totally, in other vehicle's devices and this can cause problems of compatibility and of connection.
- Substitution or replacement of the previous lighting bodies have to be done.
- The installation of special containers and support, which are bulky and aesthetically unappealing, is necessary.
- The interconnection with other equipment of the vehicle, are numerous and complex, causing risks while handling such equipment and the problem which could arise on integration.

### PROPOSED SOLUTION

The proposed device is a visual signaling system of deceleration with the following characteristics:
- Can use an independent system for detecting the acceleration of the vehicle.
- Can use also more than one transducer of acceleration to increase the system reliability.
- If deceleration occurs, it activates a warning signal depending on the danger level related to the intensity of deceleration and other kinematics variables of the vehicle.
- It can also produce a visual signaling that can vary in brightness, intermittency and color.
- Can also use lighting bodies already present in vehicle interacting by simply connecting to those in parallel.

### PRESENTATION

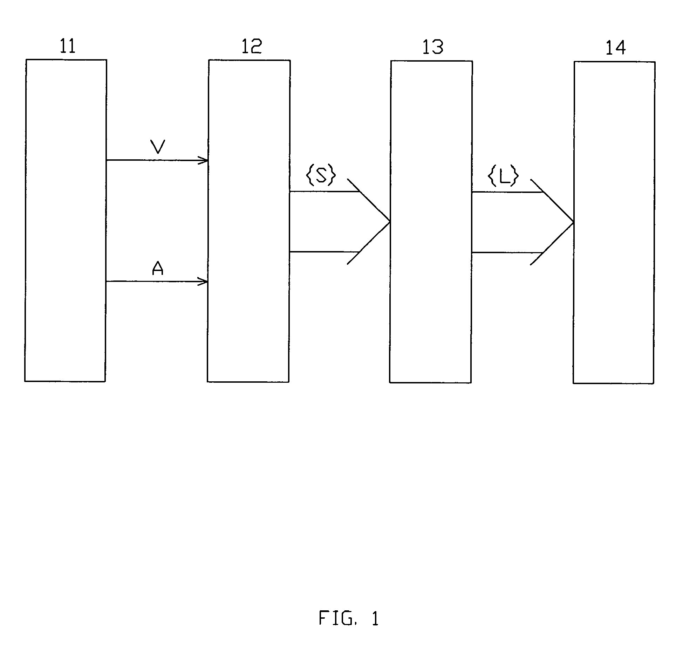

The functional description of the proposed system is showed in the fig. 1, where the four modules are indicated by which the fundamental functions are applied:
1. Detection unit Fig 1(11) ;
2. Processing unit Fig 1(12) ;
3. Execution unit Fig 1(13) ;
4. Signalizing unit Fig 1(14) ;

The module marked with number 11, detection unit, includes:
- One or more acceleration transducers;
- The circuits which condition the signals from transducer to adapt them to the processing unit, but only if the necessity of this adapting requires their presence.
- The circuits which reveal possible malfunction of transducers, identifying and signaling the ones that are broken.
- The circuit, which in the case of two or more acceleration transducers, calculates A, the most suitable value of acceleration to provide to the processing unit.

The detection unit provides the processing unit with the acceleration value to be processed, signal A. If the number of transducers or their kind make it possible, it also provides the logical signal V which is related to the good functioning of transducers. The meaning of the logical signal V is the following:
- If V=1 the acceleration signal A is valid and so it can be used correctly.
- If V=0 the acceleration signal is not valid.

The use of two or more acceleration transducers ensures a better accuracy of acceleration signal and so a better reliability in the working of the overall system.

If the processing units (12) acquires from the detection unit the acceleration signal A and its logical validity signal V, operates in the following way:
- If V=1(valid acceleration signal A):
   o Calculates using the acceleration signal the other kinematics variables useful for the next processing.
   o Correlates the kinematics variables of the vehicle to the corresponding danger level
   o Chooses, based on the danger level, the corresponding signaling mode.
- If V=0 (acceleration signal A not valid) verifies if the situation of acceleration signal not valid persists longer than default maximum time.
   o If the maximum time is not exceeded, the acquisition of following acceleration values continues to be allowed.
   o If the not valid status of acceleration signal exceeds the maximum allowed time, the system performance are reduced or its action terminates.

If the processing units (12) acquires from the detection unit only the acceleration signal A, operates in the following way:
- Calculates using the acceleration signal the other kinematics variables useful for the next processing.
- Correlates the kinematics variables of the vehicle to the corresponding danger level.
- Chooses, based on the danger level, the corresponding signaling mode.

The processing unit provides as output the set of bit {S} which in case of deceleration determines the signaling modes of lighting bodies regarding one or more of the following characteristics:
- number and position of lighting bodies which are turned on,
- brightness intensity of any lighting bodies,
- intermittency,
- color.

The execution unit(13) receives the set {S} of bit from the processing unit which determines the signaling modes, and provides as output the set {L} of connection lines to the lighting bodies, to supply them with electrical power when the lighting conditions are verified.

The signaling unit (14) is formed by the set of lighting bodies to which the execution unit supplies electric power in order to operate by complying to the signaling modes.

### REALIZATION

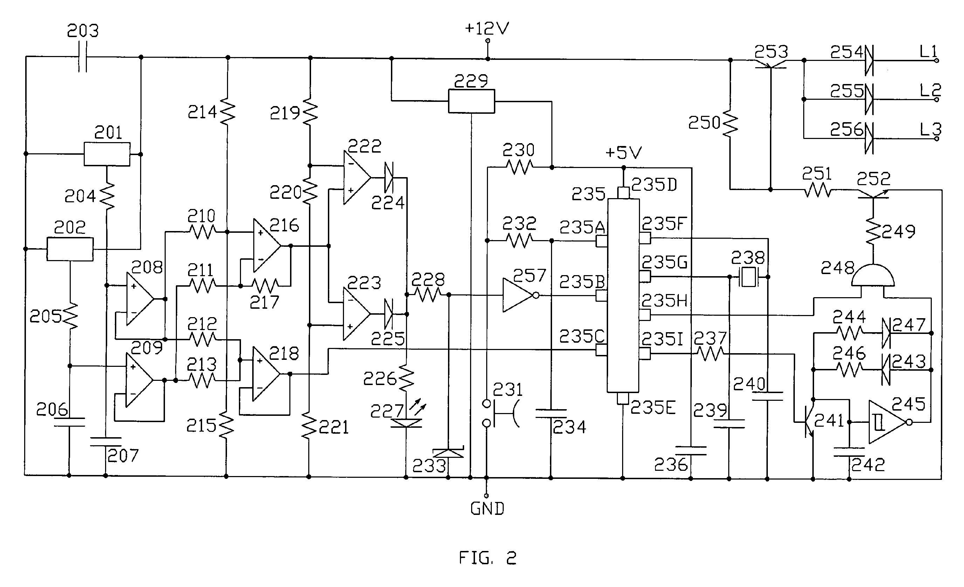

In the Fig 2 is showed the schematic of a possible realization of the proposed equipment, which uses two acceleration transducers and gives three lines to power up the corresponding lighting bodies, by using one of the following signaling modes:
1. All 3 Lighting bodies off,
2. All 3 Lighting bodies on with continuity,
3. All 3 Lighting bodies on with intermittency.

For the signaling mode two bits are used to realize the three modes of signaling:
1. The S1 bit is used for brightness, allowing the three lighting bodies to be turned on and off.
2. The S0 bit is used for intermittency allowing the possibility to choose between the presence or the absence of intermittency.

The device needs two different power supplies.
1. 5V supply for the microcontroller (component 235 of Fig.2) and logical gates (components 245, 248 and 257 of Fig.2)
2. 12V supply for powering all the operational amplifiers (components 208, 209, 216, 218, 222 and 223 of Fig.2).

The 12V supply is given to the device from external power source while the 5V supply is obtained internally by the component 229, that receives 12V and gives a stabilized 5V. Components 203 and 236 are two capacitors respectively for the 12V supply and 5V supply.

The components 201 and 202 are two acceleration transducers with the following characteristics:
- MEMS technology;
- Low consumption;
- Range:
   o minimum value -2g,
   o maximum value +2g;
- Sensitivity 1 V/g;
- Response time lower than 1 ms.

They could be powered with 12V and give a voltage proportional to acceleration with the following characteristics:
- When acceleration is -2g its value is 0.5 V
- When acceleration is +2g its value is 4.5V
- For all the other values of acceleration ranging between -2g and +2g the corresponding values of voltage range linearly between 0.5V and 4.5V.

The voltage signals from the two transducers go through two low-pass filters:
- One is made with the components 204, 207 and 208
- The other by components 205, 206 and 209

The filters are used to reduce possible noise, with frequency greater than a specific value, without affecting significantly the time response of the two transducers.

The signals of the two transducers as outputs of respective filters are sent simultaneously to a differential amplifier, composed of the components 210, 211, 214, 215, 216 and 217, and to a circuit composed of the components 212, 213 and 218, that makes the average of the two signals.

The output of the differential amplifier goes to a window comparator, made with the components 219, 220, 221, 222, 223, 224 and 225, which is followed by a clipper, made with a resistor 228 and a zener diode 233(Vz=5V), and a not gate (component 257). The comparator, the clipper and the not gate work as follows:
- The window comparator verifies that the gap between the outputs of the two transducers will not exceed a specific value Δg, which mainly depends on the linearity and offset errors of the transducers.
- The clipper adapts the high level of 12V (logic level 1) from the window comparator at the high level of 5V compatible with the not gate (component 257) and with the microcontroller (component 235).
- The not gate gives as output the logic signal V of validity of acceleration signal.

If the gap between the two transducer outputs is greater than Δg, the logic signal V for validity of the acceleration signal A is set to the logic level 0 and the led(component 227 of Fig.2) which signals the transducer malfunction will turn on. Vice versa if the gap is less than Δg, the signal V is at 1 and the led is off.

The analog signal A, which is the average of the two transducers signal, and the logic signal V, that checks the A validity, respectively enter the analog input 235C and the digital input 235B of the microcontroller (component 235 on Fig. 2), which perform the function of the processing unit.

The processing unit performs the following operation:
- If the acceleration validity bit V=1 (acceleration signal A is valid) :
   a. Calculates the speed of the vehicles integrating the acceleration signal.
   b. Identifies the following danger levels related to deceleration and speed:
      ■ Danger Level 0 Deceleration less than a specific minimum value (Dmin) or speed less than a specific minimum value (Vmin).
      ■ Danger Level 1 Deceleration greater than minimum value(Dmin) and speed ranging between minimum value(Vmin) and average value (Vmed).
      ■ Danger Level 2 Deceleration greater than Dmin and speed greater than average value (Vmed).
   c. Chooses the signaling mode based on the following criteria:
      ■ If the danger level is 0 the three lighting bodies are off
      ■ If the danger level is 1 the three lighting bodies are on without intermittency
      ■ If the danger level is 2 the three lighting bodies are on with intermittency
- If the acceleration validity bit V=0 (signal of acceleration A is not valid):
   a. No elaboration on acceleration signal is performed.
   b. If the acceleration signal not valid persists for more than a specific time (Tmax), the functioning of the system is inhibited; otherwise the acquisition of successive values of acceleration is permitted.

The components 230, 231, 232, 234 realize the microcontroller reset either manually or at power on through the pin 235A of the device.

The pin 235D and 235E of the microcontroller are used for its 5V power supply.

The quartz, component 238, and the two capacitors, components 239 and 240, generate the microcontroller clock, and they are connected with it through 235F and 235G contacts.

On the 235H and 2351 contacts the microcontroller gives, related to the presentation modality, the digital output S1 and S0, that the execution unit made by the following components 237, 241, 242, 243, 244, 245, 246, 247, 248, 249, 250, 251, 252, 253, 254, 255 and 256, processes as follows:
- When on 235H contact there is low voltage (S1=0), the output of the AND gate is at low level whatever the level of the other input is; so the transistor 252 is off and consequently also the transistor 253is off. In this case electrical power is not given to the lighting bodies, which are off.
- When on both 235H and 2351 microcontroller contacts, there are high voltage (S1=1 S0=1) the output of the AND gate will result on high voltage (logical level 1). Indeed one input of AND gate comes directly from 235H contact and is at logical level 1. The other input comes from the output of the Schmitt trigger NOT gate (component 245 in Fig. 2), that has the output locked at high value because the 241 transistor, hold in saturation by the high value voltage on 235I contact, fixes at 0 the input of the Schmitt trigger NOT gate (245) and is output at 1. So the transistor 252 is polarized in saturation through resistor 249 and at the same state is the 253 transistor through resistor 251. In this case electric power can flow continuously through diodes 254, 255 and 256 to the lighting bodies, which will light up without flashing.
- When on 235H contact there is a high voltage level (S1=1) and a low level (S0=0) on 235I contact, the AND gate has square wave on its output, because one input is the high logical level from 235H contact of microcontroller, the other is the square wave of the output of the Schmitt trigger NOT gate (component 245), that oscillates from high to low logic level by means of 242,243,244,246 and 247 components, with which it is interconnected. In this case oscillation may happen because the input of the Schmitt trigger NOT gate is not locked at a low level by the transistor 241, which is saturated. Indeed the transistor in this case acts like an open switch because its base-emitter junction is polarized below the threshold voltage, because the 235I contact on the microcontroller is at low voltage. In this case through diodes 254, 255 and 256 electrical power flows to the lighting bodies with the intermittency given by the square wave oscillator, that alternate its output voltage from high to low value. When its value is high, the output of the AND gate is at high level, the two transistors 252 and 253 are in saturation and electrical power flow to the lighting bodies, that will light up; instead when the output of the square wave generator is at low level, the output of the AND gate is at low level, the two transistors 252 and 253 are interdicted and electrical power does not flow to the lighting body, that are off.

Diodes 254, 255 and 256 are necessary to avoid, once becoming in contact with lighting bodies, the device can take energy, loading external circuits.

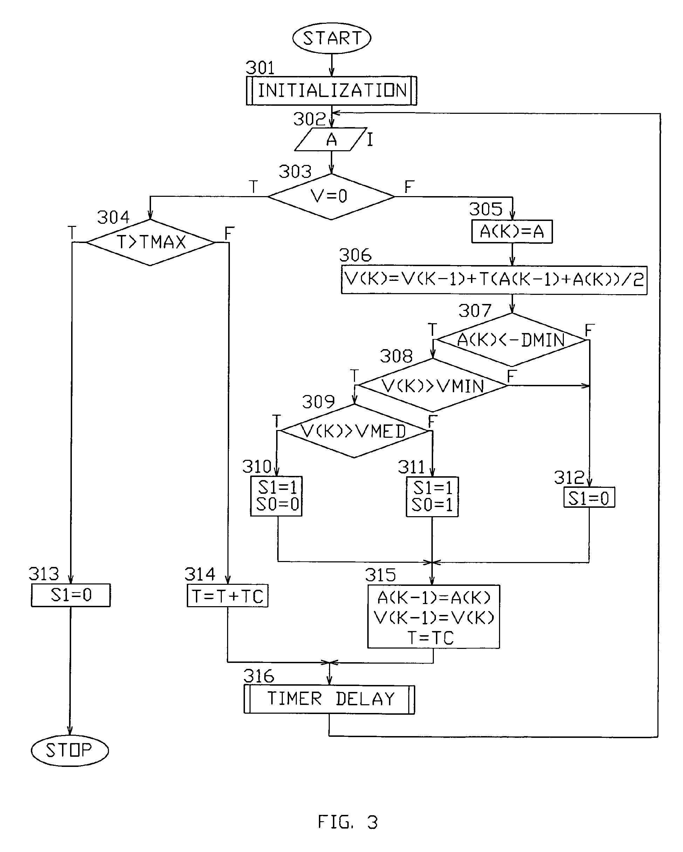

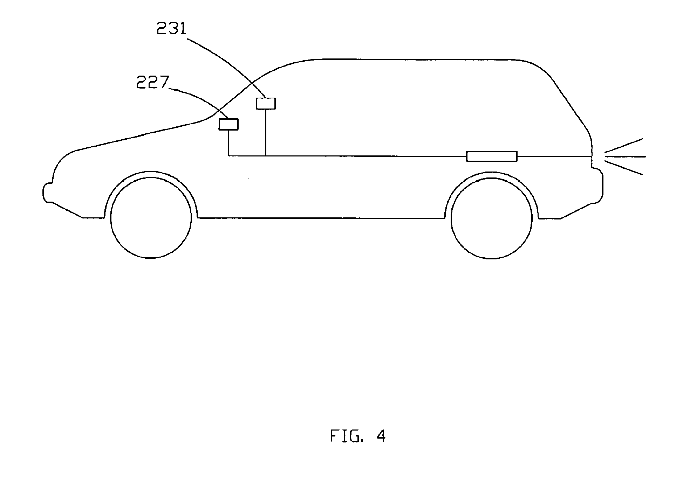

The microcontroller program gives the voltage values on 235H and 235I contacts. The flow chart of operations, calculated by microcontroller, is in Fig. 3.

The list of used variables is:
- **A**, acceleration signal in digital, reached by a conversion inside the microcontroller of the acceleration given in analogical form by the detection unit and entering the microcontroller through the 235C contact;
- **V**, logical signal, that at 1 means valid acceleration signal and at 0 means not valid acceleration signal, given by the detection unit and entering the microcontroller through the 235B contact;
- **A(k),** current acceleration value;
- **A(k-1),** previous acceleration value;
- Dmin, deceleration value below which the signaling is not activated;
- **V(k),** current speed value;
- **V(k-1),** previous speed value;
- **Vmin,** speed value below which the signaling is not activated;
- **Vmed,** the speed value, used to discern, danger level 1 from danger level 2;
- **T,** integration step, time range in which acceleration integration is executed to get the current speed value V(k);
- **Tc,** sampling acceleration step;
- **S1,** bit to set signaling illumination brightness (S1=0 turns 3 lighting bodies off, S1=1 turns 3 lighting bodies on);
- **S0,** bit to set signaling intermittency (S0=1 causes no intermittency, S0=0 causes intermittency);
- **Tmax,** maximum time allowed for invalid acceleration value.

The operations of microcontroller start from setting up the input/output lines of microcontroller and setting default value to the variables (operation 301); following with conversion in digital form of the acceleration signal, that enters in analogical form through 235C microcontroller contact (operation 302). Then operation 303 checks V bit entering the microcontroller through the 235B contact:
- If V=0 (INVALID acceleration value) no other acceleration elaboration is executed, but it is checked by operation 304 that the period of invalid acceleration value is less than the default maximum time (Tmax):
   a. If the said period is greater than Tmax, the lighting bodies are shut down (operation 313) and the functioning ends.
   b. If the said period is less than Tmax the integration step T increases of a quantity equal to the sampling step Tc (operation 314) and the operation 316 will follow.
- If V=1 (CORRECT acceleration value);
   a. The acceleration value A is set to the variable A(k) as current acceleration value (operation 305)
   b. With operation 306 we calculate the current speed value V(k), integrating acceleration in the T time range.
   c. The selection operations 307,308 and 309 follow to identify the danger level of the vehicle and to arrange the corresponding signaling modes:
      i. If the deceleration value is less than Dmin or the speed is less than Vmin no signaling is activated, setting S1=0 by operation 312.
      ii. If deceleration value is greater than Dmin and the speed is between Vmin and Vmed the lighting bodies are turned on with no intermittency, setting S1=1 and S0=1 by operation 311.
      iii. If deceleration value is greater than Dmin and the speed is greater than Vmed the lighting bodies are turned on with intermittency, setting S1=1 and S0=0 by operation 310.
   d. Following with operation 315 to set the current acceleration value A(k) to the previous A(k-1), to set the current speed value V(k) to the previous V(k-1) and to set the integration step T equal to the sample range Tc.

At the end operation 316 is executed, which consists in waiting for the timer to complete its calculation, that is set in a way that the cycle period is always equal to the sampling acceleration step Tc. Then the execution returns back to operation 302.

The above mentioned accomplishment is one of the many possible but it is not chosen by chance because it can be easily integrated as add-on parts inside mass produced vehicles, enabling the deceleration signaling to be activated whether or not the breaking system has been used.

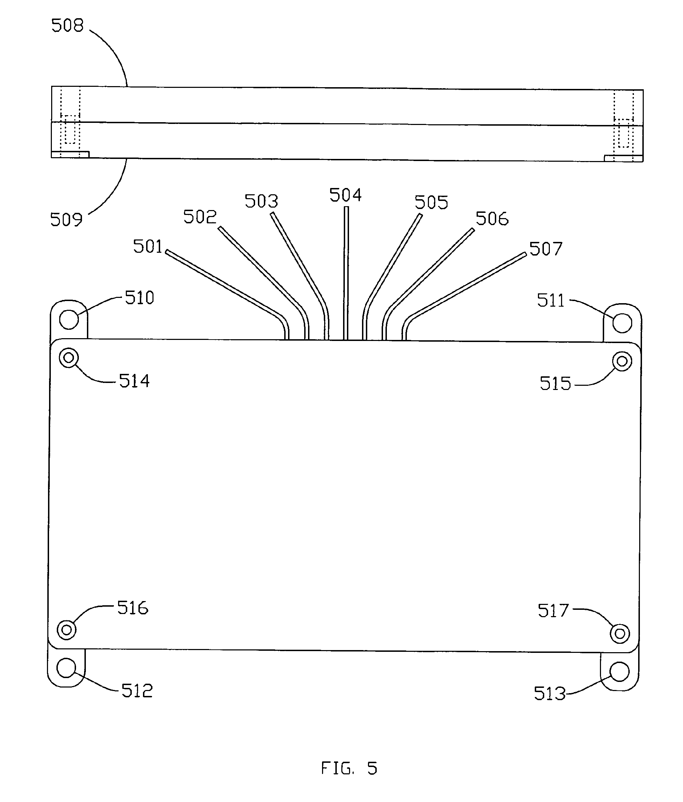

The prototype sizes, of which Fig. 5 shows horizontal and vertical projections, are 189 x 100 x 23 mm. The very small dimensions enable a very different location choice; in this example the prototype was placed, as shown in Fig. 5, on the rear part of the vehicle near the trunk.

As shown on Fig. 5 components labeled with numbers from 501 to 507 are the connection wires, used as follow:
- The 501 and 507 for 12V power supply;
- The 502 to connect reset button (component 231 on Fig.2), placed on the dashboard;
- The 503 to connect the LED (component 227 on Fig.2) placed on the dashboard, used for signaling malfunction of the transducers;
- The 504, 505 and 506 to connect the lighting bodied;

Components 508 and 509 are the upper part and the lower part of the apparatus box. With labels 510 to 513 holes are shown to place screws for fixing the box to the vehicle structure.

With labels 514 to 517 the cylindrical cavities are shown to place screws to fix upper part of the box to the lower part.

In addition to the above mentioned description many other solutions can be realized, including the most relevant which puts the device in the main vehicle project. For this purpose some of its characteristics are very useful such as the modular structure and its realization flexibility, that is present in different aspects as shown in the following:
- One or more transducers can be used with respect to the reliability level needed.
- Different signaling modes can be used which allow the following:
   a. Lighting up, lighting off or intensity modulation of each lighting body;
   b. The presence or the absence or the modulation of intermittency;
   c. The variation of lighting color.
- The detection unit, the elaboration unit and the execution unit can be made up, totally or in part, by components with programmable logic, allowing the possibility to change the system functioning simply by changing the program code.

### USE IN INDUSTRY

The described system can be used in the automobile industry field and in general in every means of transport whereas it is useful to extend the warning signaling modes to improve their safety.

## Claims

1. DECELERATION VISUAL SIGNALING SYSTEM with the following characteristics:
a) If deceleration occurs, it is able to produce a visual signaling depending on the danger level correlated with the intensities of deceleration and other kinematics variables of the vehicle.
b) It is able to produce a visual signaling which can vary in brightness, intermittency and color.
It is composed of the following **functional units**:
a) **Detection Unit;**
b) **Processing Unit;**
c) **Execution Unit;**
d) **Signaling Unit.**

2. DECELERATION VISUAL SIGNALING SYSTEM as in claim 1, **characterized by** a detection unit, which detects the acceleration and gives the relative electrical signal **A** to the processing unit.

3. DECELERATION VISUAL SIGNALING SYSTEM as in claim 1, **characterized by** a detection unit, which detects the acceleration and gives the processing unit the relative electrical signal **A** and the logical signal **V** so that:
a) If **V=1** the acceleration signal **A** is valid, so it can be used correctly.
b) If **V=0:**
i. The acceleration signal **A** is not valid.
ii. A signaling is activated which warns of transducer malfunction.

4. DECELERATION VISUAL SIGNALING SYSTEM as in claim 2, **characterized by** a processing unit, which receives from the detection unit the electrical signal A and operates as follows:
a) Using the acceleration signal **A**, it computes the other kinematics variables, which are used in successive computations.
b) Based on the kinematics variables of the vehicle, it decides the proper danger level.
c) Based on the danger level, it selects the signaling mode.
d) If deceleration occurs, it gives the execution unit the information that specifies the signaling mode of the lighting bodies with respect to:
■ Number and positions of the lighting bodies which are turned on,
■ Brightness intensity of each lighting body which is turned on,
■ Intermittency,
■ Color.

5. DECELERATION VISUAL SIGNALING SYSTEM as in claim 3 **characterized by** a processing unit, which receives from the detection unit the electrical signal **A** and the logical signal **V** of the validity of the signal **A**, operating as follows:
a) If **V=1** (Electrical acceleration signal valid):
i. Using the acceleration signal **A,** it computes the other kinematics variables which are used in successive operations.
ii. Based on the kinematics variables of the vehicle, it decides the proper danger level.
iii. Based on the danger level, it decides the signaling mode.
iv. If deceleration occurs, it gives the execution unit the information that specifies the signaling mode of the lighting bodies with respect to:
■ Number and positions of the lighting bodies which are turned on,
■ Brightness intensity of each lighting body which is turned on,
■ Intermittency,
■ Color.
b) if **V=0** (Electrical acceleration signal not valid), it checks if the duration of the acceleration signal not valid exceeds the maximum permitted time or not.
i. If the maximum time is not exceeded, successive values of acceleration continues to be acquired.
ii. If the duration of the acceleration signal not valid exceeds the maximum permitted time, the system functioning is stopped or continues with reduced features.

6. DECELERATION VISUAL SIGNALING SYSTEM as in one of the claims 4 or 5 **characterized by** an execution unit, which receives the information related to the signaling modes from the processing unit and gives through electrical lines the power to the lighting bodies when the required conditions allow them to be turned on.

7. DECELERATION VISUAL SIGNALING SYSTEM as in claim 6 **characterized by** a signaling unit composed of a set of lighting bodies that light up when they have to make visible the signaling.

8. DECELERATION VISUAL SIGNALING SYSTEM as in claim 7 **characterized by** the possibility to place the lighting bodies in such a way any requirement or need can be reached.

9. DECELERATION VISUAL SIGNALING SYSTEM as in claim 8 **characterized by** a processing unit, which is able to directly manage the electric power to the lighting bodies of the signaling unit. In this case the execution unit is not present in the implementation.

10. DECELERATION VISUAL SIGNALING SYSTEM as in one of the claims 8 or 9 which is able to work autonomously or be integrated with further signaling systems if required.

11. DECELERATION VISUAL SIGNALING SYSTEM as in claim 10 **characterized by** the possibility to place the said functional units, partially or in its entirety, in different areas of the vehicle.

## Amended claims

### Amended claims in accordance with Rule 137(2) EPC.

**1.** A DECELERATION VISUAL SIGNALING SYSTEM, which produces a visual signaling depending on the deceleration of the vehicle where it is placed, **characterized by** the capability to work independently of the brake pedal and to activate a large variety of visual signaling modes by means of the following functional units:
- **Detection Unit** (11),
- **Processing Unit** (12),
- **Execution Unit** (13),
- **Signaling Unit** (14).

**2.** A DECELERATION VISUAL SIGNALING SYSTEM, as in claim 1, where said Detection Unit includes (21) two or more **acceleration sensors,** which detect the longitudinal acceleration of the vehicle, and the electronic circuits, which process the electric signals of said acceleration sensors, in order to:
- decrease the noise that can affect the acceleration signals;
- find out the possible malfunction of the acceleration sensors, identifying those unreliable so to exclude them from any subsequent use;
- calculate a set of one or more **validity bits** which indicate the ones, among the acceleration sensors, which work properly and the ones, among the acceleration sensors, which are unreliable;
- light, according to said validity bits, one or more leds (227) which warn about the ones, among the acceleration sensors, which do not work correctly;
- calculate the **most significant electric value of acceleration** by using all the electric signals given by the ones, among the acceleration sensors, which work properly;
- provide said Processing Unit with said validity bits and said most significant electric value of acceleration.

**3.** A DECELERATION VISUAL SIGNALING SYSTEM, as in claim 2, where the Processing Unit is formed by the circuits (22) which receive from the Detection Unit the validity bits and the most significant electric value of acceleration in order to:
- Decide, according to the validity bits, if the system can work at full performance or has to work at reduced performance by lowering the number of signaling modes that can be viewed;
- stop the system operation when all the acceleration sensors are unreliable;
- calculate the velocity of the vehicle (303) by making the integral of the acceleration;
- use a decision table algorithm (31) which considers the combination of deceleration and velocity of the vehicle for selecting the appropriate visual signaling mode by taking into account its braking conditions in terms of impact risk of a vehicle coming behind;
- calculate the **mode bits** which express, in encoded form, the selected mode of visual signaling;
- provide said Execution Unit with said mode bits so that the Processing Unit is free to return to acquire and process the subsequent acceleration value while the execution unit proceeds with the implementation of the visual signal to be displayed.

**4.** A DECELERATION VISUAL SIGNALING SYSTEM, as in claims 3, where the Processing Unit includes a reset button (231) that, if activated, restarts all system operations.

**5.** A DECELERATION VISUAL SIGNALING SYSTEM, as in claims 4, where the Processing Unit includes a relay switch (258) by means of which the proposed system cooperates with the brake pedal so allowing its use when the deceleration visual signaling system does not work correctly or when the deceleration visual signaling system works correctly but does not require the ignition of any lighting body.

**6.** A DECELERATION VISUAL SIGNALING SYSTEM, as in claim 4 or 5, where the Execution Unit includes two modules in order to activate a large variety of visual signaling modes:
- one (23) that decodes the mode bits and, according to the signaling mode selected, performs all the operations necessary to activate it;
- the other (24) that handles the electric power toward the **lighting bodies.**

**7.** A DECELERATION VISUAL SIGNALING SYSTEM, as in claim 6, where the Execution Unit decodes the mode bits so to identify the signaling mode selected and to operate in order to:
- determine the number and location of said lighting bodies which are to be lighted sequentially or at a single stroke;
- control the blinking of the lighting bodies in terms of duty cycle and frequency;
- set the amount of the electric power that has to flow to the lighting bodies so regulating their brightness;
- supply the electric power to the lighting bodies by using the related **electrical lines.**

**8.** A DECELERATION VISUAL SIGNALING SYSTEM, as in claim 7, where the Execution Unit includes diodes for all said electrical lines in order to prevent the absorption of electric energy from the external devices which may be in contact with the same lighting bodies.

**9.** A DECELERATION VISUAL SIGNALING SYSTEM, as in claim 8, where said Signaling Unit can use lighting bodies in different colors or in led technology or both located preferably at the rear of the vehicle which make a signaling mode visible when it is to be activated.

**10.** A DECELERATION VISUAL SIGNALING SYSTEM, as in claim 9, where the Execution Unit has the capability to contact the Signaling Unit with many electrical lines which may be useful if the lighting bodies are in led technology.

**11.** A DECELERATION VISUAL SIGNALING SYSTEM, as in claim 8 or 9 or 10, where the Signaling Unit includes the existing lighting bodies of the vehicle.
